# EUROPÄISCHE PATENTSCHRIFT

(11) **EP 3 553 361 B1**
(45) Veröffentlichungstag und Bekanntmachung des Hinweises auf die Patenterteilung: **12.07.2023**
(21) Anmeldenummer: 19167045.4
(22) Anmeldetag: 03.04.2019
(51) Int. Cl.: F16L 33/22

(54) **KLEMMRING FÜR SCHLAUCHVERBINDUNGEN, DEN KLEMMRING UMFASSENDE KLEMMVORRICHTUNG FÜR SCHLAUCHVERBINDUNGEN SOWIE DIE KLEMMVORRICHTUNG UMFASSENDE SCHLAUCHVERBINDUNG**
CLAMPING RING FOR PIPE JOINTS, CLAMPING DEVICE COMPRISING THE CLAMPING RING FOR PIPE JOINTS AND HOSE CONNECTION COMPRISING THE CLAMPING DEVICE
BAGUE DE SERRAGE POUR RACCORDEMENT DE TUYAU, DISPOSITIF DE SERRAGE COMPORTANT LA BAGUE DE SERRAGE POUR RACCORDEMENTS DE TUYAU AINSI QUE DISPOSITIF DE SERRAGE COMPORTANT UN RACCORDEMENT DE TUYAU

(30) Priorität: 10.04.2018 DE 102018205397
(43) Veröffentlichungstag der Anmeldung: 16.10.2019
(73) Patentinhaber: WMF GmbH, 73312 Geislingen/Steige (DE)
(72) Erfinder: Aubele, Thomas, 89542 Herbrechtingen (DE); Schirrmacher, Philipp, 89073 Ulm (DE)
(74) Vertreter: Pfenning, Meinig & Partner mbB

(56) Entgegenhaltungen:
- EP-A1- 1 918 625
- EP-A1- 2 447 586
- EP-A2- 1 788 292
- JP-A- H06 207 694

## Beschreibung

Die vorliegende Erfindung betrifft einen Klemmring für Schlauchverbindungen. Der Klemmring enthält einen um eine Mittelache des Klemmrings angeordneten hohlzylinderförmigen Abschnitt zur Aufnahme einer Schlauch- oder Rohrleitung und eine Mehrzahl von Armen, die parallel zur Mittelachse des Klemmrings von einem ersten offenen Ende des hohlzylinderförmigen Abschnitts abstehen, wobei an einem zweiten offenen Ende des hohlzylinderförmigen Abschnitts mindestens ein Stoppelement zur Verhinderung eines vollständigen Durchsteckens einer Schlauch- oder Rohrleitung durch den hohlzylinderförmigen Abschnitt angeordnet ist. Auf der Außenseite des Klemmrings sind Begrenzungselemente angeordnet, die zumindest abschnittsweise um die Mittelachse des Klemmrings verlaufen und so angeordnet sind, dass eine parallel zur Mittelachse des Klemmrings verlaufende Bewegung einer auf den Klemmring aufgesteckten Befestigungsmutter in beide Richtungen eingeschränkt oder verhindert wird. Mit dem erfindungsgemäßen Klemmring ist eine vereinfachte, sichere und wiederholbare Montage und Demontage von relativ starren Schläuchen auf einen Konus zur totraumfreien oder zumindest totraumarmen Gestaltung von Schlauchverbindungen möglich. Zudem betrifft die vorliegende Erfindung auch eine den erfindungsgemäßen Klemmring umfassende Klemmvorrichtung, eine die erfindungsgemä-ße Klemmvorrichtung umfassende Schlauchverbindung, einen die erfindungsgemäße Schlauchverbindung umfassenden Getränkebereiter sowie die Verwendung eines erfindungsgemäßen Klemmrings bzw. einer erfindungsgemäßen Klemmvorrichtung zur fluiddichten Fixierung einer Schlauch- oder Rohrleitung für ein flüssiges Medium, vorzugsweise Milch, in einem Getränkebereiter.

Verkeimungsanfällige Medien (wie z.B. Milch) werden in Maschinen zur Getränkezubereitung hauptsächlich in flexiblen Silikonschläuchen geführt, da diese in Verbindung mit Schlauchnippeln eine totraumfreie Steckverbindung zulassen. Silikonschläuche müssen jedoch regelmäßig getauscht und gewartet werden. Um dies zu vermeiden sollen zukünftig relativ starre Schläuche aus z.B. PTFE oder PFA verwendet werden. Die meisten der bisher im Stand der Technik verwendeten Steckanschlüsse für solche starren Schläuche sind jedoch nicht totraumarm bzw. totraumfrei. Dadurch besteht die Gefahr der Verkeimung.

Ein Ansatz zur Gestaltung einer totraumarmen oder totraumfreien Schlauchverbindung für relativ starre Schläuche, ist in EP 0 879 980 A2, EP 2 447 586 A1 und DE 42 11 498 A1 beschrieben.

Die EP 1 918 625 A1 offenbart ebenfalls einen Klemmring für Schlauchverbindungen. Die JP H06 207694 A offenbart einen Klemmring für Schlauchverbindungen gemäß des Oberbegriffs des unabhängigen Anspruchs 1.

Das Grundprinzip ist folgendes: Der Schlauch wird auf einen Konus aufgeschoben. Dadurch wird dieser aufgeweitet (auch plastisch verformt). Ein Klemmring und eine Überwurfmutter werden auf den Schlauch gestülpt. Beim Festziehen der Überwurfmutter wird der Schlauch zwischen Klemmring und Konus fest geklemmt. Dadurch sitzt der Schlauch auch bei anliegendem Mediumsdruck fest.

Im Falle von EP 2 447 586 A1 sind der Klemmring und die Überwurfmutter als ein Teil ausgeführt.

Da die Abmessungen der Schläuche ebenfalls toleranzbehaftet sind, ist der Ausführung des Konus eine große Bedeutung zuzumessen. Bei der Ausführung des Konus ist folgendes zu beachten:
- Je größer der Winkel des Konus, desto fester sitzt der Schlauch. Auch werden die Toleranzen des Schlauchinnendurchmessers besser kompensiert.
- Aber: Je größer der Winkel des Konus, desto mehr Kraft zum Aufschieben des Schlauches ist notwendig.
- Dies kann kompensiert werden, indem der Konus länger ausgeführt wird (geringere Steigung). Dies verlängert die Baugröße, verringert aber die notwendige aufzubringende Kraft zum Aufschieben des Schlauchs.

Der beschriebene Stand der Technik hat die folgenden Nachteile:
- Der Schlauch muss vor dem Zudrehen der Überwurfmutter fest auf den Konus geschoben werden. Dies erfordert einen gewissen Kraftaufwand und es ist nicht ersichtlich oder spürbar, ob der Schlauch weit genug aufgesteckt wurde. Wird der Schlauch jedoch nicht weit genug auf den Konus geschoben, kann er bei anliegendem Druck herunterrutschen.
- Die Kraft, welche zum Aufstecken des Schlauches von Hand aufgebracht werden kann ist limitiert (auch aufgrund der glatten Schlauchoberfläche). Dies limitiert den Konuswinkel und damit die Dichtigkeit und Druckbeständigkeit (s. oben).
- Ein Nachziehen bei Undichtigkeit durch Relaxation des Schlauches ist nur bedingt möglich (abhängig von der Position von Schlauch zu Klemmbuchse)
- Nach dem Auf-/ Abschrauben der Überwurfmutter, verbleibt der Schlauch auf dem Konus und muss mit hohem Kraftaufwand heruntergezogen werden.
- Es sind mehrere lose Teile vorhanden, welche verloren gehen können.

Ausgehend hiervon war es die Aufgabe der vorliegenden Erfindung einen Klemmring anzugeben, mit welchem eine vereinfachte, sichere und wiederholbare Montage und Demontage von relativ starren Schläuchen auf einen Konus zur totraumfreien oder zumindest totraumarmen Gestaltung von Schlauchverbindungen möglich ist.

Diese Aufgabe wird bezüglich eines Klemmrings mit den Merkmalen des Patentanspruchs 1, bezüglich einer Klemmvorrichtung mit den Merkmalen des Patentanspruchs 11, bezüglich einer Schlauchverbindung mit den Merkmalen des Patentanspruchs 16 und bezüglich eines Getränkebereiters mit den Merkmalen des Patentanspruchs 17 gelöst. In Patentanspruch 18 werden Verwendungsmöglichkeiten des erfindungsgemäßen Klemmrings und der erfindungsgemäßen Klemmvorrichtung angegeben. Die jeweilig abhängigen Patentansprüche stellen dabei vorteilhafte Weiterbildungen dar.

Erfindungsgemäß wird somit ein Klemmring für Schlauchverbindungen, enthaltend einen um eine Mittelache des Klemmrings angeordneten hohlzylinderförmigen Abschnitt zur Aufnahme einer Schlauch- oder Rohrleitung und eine Mehrzahl von Armen, die parallel zur Mittelachse des Klemmrings von einem ersten offenen Ende des hohlzylinderförmigen Abschnitts abstehen, angegeben. An einem zweiten offenen Ende des hohlzylinderförmigen Abschnitts ist mindestens ein Stoppelement zur Verhinderung eines vollständigen Durchsteckens einer Schlauch- oder Rohrleitung durch den hohlzylinderförmigen Abschnitt angeordnet. Zudem sind auf der Außenseite des Klemmrings Begrenzungselemente angeordnet, die zumindest abschnittsweise um die Mittelachse des Klemmrings verlaufen und so angeordnet sind, dass eine parallel zur Mittelachse des Klemmrings verlaufende Bewegung einer auf den Klemmring aufgesteckten Befestigungsmutter in beide Richtungen eingeschränkt oder verhindert wird.

Der erfindungsgemäße Klemmring kann zusammen mit einer Befestigungsmutter dazu verwendet werden, um einen relativ starren Schlauch an einem einen Konus aufweisenden Grundkörper zu befestigen. Der hohlzylinderförmige Abschnitt ermöglicht dabei die Grundfunktion des Klemmrings, dass der in den hohlzylinderförmigen Abschnitt aufgenommene Schlauch zwischen dem Konus und dem Klemmring gequetscht und damit fixiert wird, sodass eine totraumfreie oder zumindest totraumarme Schlauchverbindung entsteht. Der hohlzylinderförmige Abschnitt kann am zweiten offenen Ende Aussparungen aufweisen. Zudem kann der hohlzylinderförmige Abschnitt an seiner Außenseite nach außen abstehende Elemente aufweisen.

Bei einer Mittelachse des Klemmrings handelt es sich um eine Achse, um welche der Klemmring ringförmig herum angeordnet ist.

Die Begriffe Schlauch und Schlauchleitung werden in der vorliegenden Anmeldung synonym verwendet.

Die Arme dienen unter anderem als Abschnitt des Klemmrings zum Aufstecken einer Befestigungsmutter auf den Klemmring. Die Mehrzahl von Armen stehen parallel zur Mittelachse des Klemmrings von einem ersten offenen Ende des hohlzylinderförmigen Abschnitts ab. Die Arme stellen damit eine Art teilweise Verlängerung des hohlzylinderförmigen Abschnitts dar. Beispielsweise können die Arme als teilhohlzylinderförmige Elemente ausgeführt sein. In diesem Fall würden die Arme eine Fortsetzung des hohlzylinderförmigen Abschnitts mit Aussparungen darstellen. Die Arme können auch als teilhohlkegelförmige Elemente ausgeführt sein. Zudem können die Arme auf der Innenseite eine Fase aufweisen, um die Aufnahme eines Schlauchs in den hohlzylinderförmigen Abschnitt zu erleichtern. Die Arme können auch auf der Außenseite eine Fase aufweisen.

Das mindestens eine Stoppelement verhindert, dass der Schlauch vollständig durch den hohlzylinderförmigen Abschnitt durchgesteckt werden kann. Mit anderen Worten wird die Bewegung eines in den Klemmring aufgenommen Schlauchs in eine Richtung, nämlich die Einsteckrichtung des Schlauchs, begrenzt. Der Schlauch kann somit so weit in den hohlzylinderförmigen Abschnitt eingeschoben werden, bis er am mindestens einen Stoppelement anschlägt, und befindet sich dann in einer definierten Position innerhalb des Klemmrings.

Die auf der Außenseite des Klemmrings angeordneten Begrenzungselemente dienen der Fixierung einer auf den Klemmring aufgesteckten Befestigungsmutter. Die Begrenzungselemente verlaufen dabei zumindest abschnittsweise um die Mittelachse des Klemmrings. Die Begrenzungselemente können z.B. auf der Außenseite des hohlzylinderförmigen Abschnitts und/oder auf der Außenseite der Arme angeordnet sein. Die Begrenzungselemente sind so angeordnet sind, dass eine parallel zur Mittelachse des Klemmrings verlaufende Bewegung einer auf den Klemmring aufgesteckten Befestigungsmutter in beide Richtungen eingeschränkt oder verhindert wird. Mit anderen Worten wird eine auf den Klemmring aufgesteckte Befestigungsmutter durch die Befestigungselemente in axialer Richtung zumindest im Wesentlichen fixiert. Eine rotatorische Bewegung der auf den Klemmring aufgesteckten Befestigungsmutter ist hingegen uneingeschränkt möglich, sodass die Befestigungsmutter zusammen mit dem Klemmring auf Grundkörper, der einen Konus aufweist, aufgeschraubt bzw. in einen Grundkörper, der einen Konus aufweist, eingeschraubt werden kann, wobei gleichzeitig ein in den Klemmring aufgenommener Schlauch automatisch auf den Konus gepresst wird. Diese Lösung ist vorteilhaft gegenüber einer einstückigen Ausführung von Klemmring und Befestigungsmutter, wie sie beispielsweise in EP 2 447 586 A1 beschrieben ist, da eine einstückige Ausführung ohne rotarischen Freiheitsgrad der Befestigungsmutter in Bezug auf den Klemmring die Gefahr birgt, dass beim Verpressvorgang des Schlauchs zwischen Konus und Klemmring während des Auf- bzw. Einschraubens der Befestigungsmutter der Schlauch wieder aus dem Klemmring herausgedreht wird.

Dadurch, dass die Bewegung einer auf den Klemmring aufgesteckten Befestigungsmutter in axialer Richtung eingeschränkt oder verhindert ist und zudem eine in den Klemmring aufgenommene Schlauch- oder Rohrleitung in einer definierten Position innerhalb des Klemmrings angeordnet ist, wird der Schlauch beim Auf- bzw. Einschrauben der Befestigungsmutter automatisch auf den Konus des Grundkörpers gepresst. Ein händisches Vorstecken des Schlauchs ist nicht notwendig. Dadurch werden Fehler, die beim händischen Vorstecken des Schlauchs auftreten können, vermieden. Zudem ist eine höhere Verpressung möglich, d.h. der Schlauch ist fester fixiert, da eine Kraftübersetzung über das Gewinde der Befestigungsmutter vorhanden ist. Diese Kraftübersetzung hat auch den Vorteil, dass weniger Kraft aufgewendet muss, um die Schlauchleitung zu montieren. Im Weiteren ist vorteilhaft, dass eine Undichtigkeit, z.B. aufgrund von Relaxation des Schlauchs, durch Nachziehen der Überwurfmutter auf einfache Weise ausgeglichen werden kann. Ferner ist auch ein Anfasen der Schläuche nicht notwendig. Außerdem erlaubt die Fixierung der Befestigungsmutter auf dem Klemmring, dass der Klemmring und die Befestigungsmutter vormontiert werden können, sodass nur noch ein zusammengesetztes Teil anstelle von zwei losen verlierbaren Einzelteilen vorliegt.

Durch das beschriebene Zusammenwirken der Befestigungselemente und des mindestens einen Stoppelements wird zudem erreicht, dass der Schlauch beim Abschrauben der Befestigungsmutter automatisch vom Konus abgezogen und somit nicht auf dem Konus verbleibt. Hierbei wird durch das Abschrauben der Befestigungsmutter der Klemmring vom Konus wegbewegt. Durch das mindestens eine Stoppelement wird der Schlauch dann beim Herausdrehen der Befestigungsmutter automatisch mit herausgezogen. Ein händisches Abziehen der Schlauchleitung vom Konus ist somit nicht notwendig. Bei der Demontage des Schlauchs ist somit ein deutlich geringerer Kraftaufwand nötig.

Gesamt betrachtet wird somit eine vereinfachte, sichere und wiederholbare Montage und Demontage einer relativ starren Schlauch- bzw. Rohrleitung ermöglicht, wobei eine totraumfreie oder zumindest totraumarme Schlauchverbindung erhalten wird.

Eine bevorzugte Ausführungsform des erfindungsgemäßen Klemmrings zeichnet sich dadurch aus, dass es sich bei den Armen um Federarme handelt, die vorzugsweise zur Mittelachse des Klemmrings hin und/oder von der Mittelachse des Klemmrings weg elastisch verbiegbar sind. Mit anderen Worten können die Arme nach innen zur Mittelachse zusammengedrückt und/oder nach außen von der Mittelachse weg auseinandergedrückt werden, wobei sich die Arme jeweils elastisch verbiegen, d.h. nach Beendigung des Zusammen- bzw. Auseinanderdrückens wieder automatisch in ihre ursprüngliche Position zurückgehen. Diese Ausführungsform hat den Vorteil, dass eine Befestigungsmutter leichter auf den Klemmring aufgesteckt werden kann, da beim Aufstecken der Befestigungsmutter die Arme zusammengedrückt werden können. Zudem wird auch das Einführen einer Schlauch- oder Rohrleitung in den hohlzylinderförmigen Abschnitt erleichtert, da die Arme durch den Schlauch etwas auseinandergedrückt werden können, und so weniger Kraftaufwand beim Verbinden des Klemmrings mit dem Schlauch nötig ist.

Eine weitere bevorzugte Ausführungsform ist dadurch gekennzeichnet, dass mindestens zwei der Arme, bevorzugt mindestens drei der Arme, auf einer der Mittelachse des Klemmrings zugewandten Seite jeweils mindestens ein Krallelement mit einer in Richtung des zweiten offenen Endes des hohlzylinderförmigen Abschnitts weisenden Kante aufweisen. Die Kante des Krallelements greift in eine im hohlzylinderförmigen Abschnitt aufgenommene Schlauch- bzw. Rohrleitung ein und blockiert damit eine von dem zweiten offenen Ende des hohlzylinderförmigen Abschnitts weggerichtete axiale Bewegung der Schlauch- bzw. Rohrleitung. Dadurch, dass die Kante in Richtung des zweiten offenen Endes des hohlzylinderförmigen Abschnitts weist, ist das Einführen des Schlauchs jedoch trotzdem noch auf einfache Weise und ohne großen Kraftaufwand möglich. Mit anderen Worten ist die Kante so ausgeführt, dass diese den Schlauch in Einsteckrichtung durchlässt, aber ein Herausziehen gegen die Einsteckrichtung verhindert. Durch das Zusammenwirken des mindestens einen Stoppelements und des mindestens einen Krallements wird somit die axiale Bewegung eines in den hohlzylinderförmigen Abschnitt aufgenommenen Schlauchs in beide Richtungen verhindert. Auf diese Weise wird der in den Klemmring aufgenommene Schlauch fest fixiert und kann nicht aus dem Klemmring herausrutschen. Zudem kann so der Schlauch zusammen mit dem Klemmring und der Befestigungsmutter vormontiert werden, sodass es keine losen verlierbaren Teile mehr gibt.

Weiterhin ist es bevorzugt, dass mindestens zwei der Arme, bevorzugt mindestens drei der Arme, auf einer der Mittelachse des Klemmrings zugewandten Seite jeweils eine Fase aufweisen. Durch diese Fase wird das Einführen der Schlauch- bzw. Rohrleitung in den hohlzylinderförmigen Abschnitt vereinfacht.

In einer besonders bevorzugten Ausführungsform weisen mindestens zwei der Arme, bevorzugt mindestens drei der Arme, auf einer der Mittelachse des Klemmrings zugewandten Seite
- jeweils mindestens ein Krallelement mit einer in Richtung des zweiten offenen Endes des hohlzylinderförmigen Abschnitts weisenden Kante, und
- jeweils eine Fase auf.

Vorzugsweise befindet sich die Kante des Krallelements dabei am Ende der Fase. Durch die Fase wird der Effekt des Krallelements noch verstärkt. Beim Zudrehen der Befestigungsmutter wird über diese Fase die Kante zusätzlich in den Schlauch gepresst und die Haltekraft zusätzlich verstärkt.

Es ist erfindungsgemäß, dass auf mindestens zwei der Arme, bevorzugt auf mindestens drei der Arme, jeweils mindestens eines der Begrenzungselemente angeordnet ist, wobei diese mindestens zwei Arme mit den darauf angeordneten Begrenzungselementen als Clipelemente ausgeführt sind, welche in Richtung zur Mittelachse des Klemmrings hin elastisch verbiegbar sind und vorzugsweise an einer der Mittelachse des Klemmrings abgewandten Seite eine Fase aufweisen. Durch die Clipelemente wird das Aufstecken einer Befestigungsmutter auf den Klemmring stark vereinfacht, wobei gleichzeitig eine axiale Bewegung der aufgesteckten Befestigungsmutter entgegen der Aufsteckrichtung mit einfachen Mitteln verhindert werden kann. Durch die auf der Außenseite der Begrenzungselement angeordnete Fase wird das Aufstecken der Befestigungsmutter noch weiter vereinfacht, da die Clipelemente so beim Aufstecken automatisch nach innen in Richtung der Mittelachse des Klemmrings gedrückt werden.

Vorzugsweise umfasst das mindestens eine Stoppelement eine Mehrzahl von Stoppelement, besonders bevorzugt mindestens drei, ganz besonders bevorzugt mindestens sechs, Stoppelemente.

In einer weiteren bevorzugten Ausführungsform ist das mindestens eine Stoppelement auf der Innenseite des hohlzylinderförmigen Abschnitts entlang einer Kante des zweiten offenen Endes des hohlzylinderförmigen Abschnitts angeordnet. Auf diese Weise kann eine einfache Ausführung des mindestens einen Stoppelements erreicht werden. In dieser Ausführungsform kann der hohlzylinderförmige Abschnitt an seinem zweiten offenen Ende Aussparungen aufweisen. Das mindestens eine Stoppelement kann dann z.B. in einem oder mehreren Bereichen ohne Aussparung ausgeführt sein.

Eine weitere bevorzugte Ausführungsform des erfindungsgemäßen Klemmrings ist dadurch gekennzeichnet, dass
- auf der Außenseite des hohlzylinderförmigen Abschnitts zusätzliche Verdrehsicherungselemente angeordnet sind, die vorzugsweise als parallel zur Mittelachse des Klemmrings verlaufende Stege ausgeführt sind, oder
- mindestens zwei der Begrenzungselemente so ausgeführt sind, dass sie zusätzlich als Verdrehsicherungselemente dienen.

Die Verdrehsicherungselemente verhindern ein Verdrehen, d.h. eine rotatorische Bewegung, des Klemmrings innerhalb eines Grundkörpers, der einen Konus aufweist, auf welchen die Schlauch- bzw. Rohrleitung aufgesteckt ist. Ein solcher Grundkörper weist in der Regel einen um den Konus herum angeordneten Gehäuseabschnitt auf, in welchem der Klemmring dann angeordnet ist. Die Verdrehsicherungselemente können dann in passende Gegenstücke auf der Innenseite des Gehäuseabschnitts eingreifen, wodurch ein Verdrehen des Klemmrings in Bezug auf den Grundkörper bzw. den Konus verhindert wird. Auf diese Weise kann besser verhindert werden, dass sich bei einem Drehen der Befestigungsmutter der Klemmring mitdreht. Das hätte zur Folge, dass sich der Schlauch aus dem Klemmring herausdreht. Ein solches unerwünschtes Herausdrehen kann somit durch die Verdrehsicherungselemente vermieden werden.

Die Verdrehsicherungselemente können auf zwei verschiedene Weisen realisiert werden. Entweder sind mindestens zwei der Begrenzungselemente so ausgeführt, dass sie zusätzlich als Verdrehsicherungselemente dienen, wobei in diesem Fall die Verdrehsicherungselemente vorzugsweise auf der Außenseite des hohlzylinderförmigen Abschnitts angeordnet sind. Oder neben den Begrenzungselementen sind zusätzliche Verdrehsicherungselemente vorhanden, die auf der Außenseite des hohlzylinderförmigen Abschnitts angeordnet sind. Diese zusätzlichen Verdrehsicherungselemente sind vorzugsweise als parallel zur Mittelachse des Klemmrings verlaufende Stege ausgeführt.

Es ist erfindungsgemäß, dass die Begrenzungselemente eine Gruppe von zwei oder mehr ersten Begrenzungselementen und eine Gruppe von zwei oder mehr zweiten Begrenzungselementen umfassen, wobei die ersten Begrenzungselemente weiter vom zweiten Ende des hohlzylinderförmigen Abschnitts entfernt sind als die zweiten Begrenzungselemente, und wobei zwischen der Gruppe von ersten Begrenzungselementen und der Gruppe von zweiten Begrenzungselementen ein Aufnahmebereich für eine aufzusteckende Befestigungsmutter angeordnet ist. In dieser Ausführungsform ist eine auf den Klemmring aufgesteckte Befestigungsmutter somit zwischen den ersten Begrenzungselementen und den zweiten Begrenzungselementen fixiert, wobei die ersten Begrenzungselemente die axiale Bewegung der Befestigungsmutter in die eine Richtung und die zweiten Begrenzungselemente die axiale Bewegung der Befestigungsmutter in die andere Richtung einschränkt oder verhindert. So kann auf einfache Weise erreicht werden, dass eine parallel zur Mittelachse des Klemmrings verlaufende Bewegung (d.h. eine axiale Bewegung) einer auf den Klemmring aufgesteckten Befestigungsmutter in beide Richtungen eingeschränkt oder verhindert wird.

Weiterhin ist es bevorzugt, dass die ersten Begrenzungselemente auf einer von der Mittelachse des Klemmrings abgewandten Seite der Arme angeordnet sind und die zweiten Begrenzungselemente
- ebenfalls auf einer von der Mittelachse des Klemmrings abgewandten Seite der Arme (4) oder
- auf der Außenseite des hohlzylinderförmigen Abschnitts (1)
angeordnet sind.

Für die Anordnung der ersten und zweiten Begrenzungselemente auf der Außenseite des Klemmrings gibt es demnach zwei bevorzugte Varianten. Einerseits können die ersten Begrenzungselemente auf einer von der Mittelachse des Klemmrings abgewandten Seite der Arme und die zweiten Begrenzungselemente auf der Außenseite des hohlzylinderförmigen Abschnitts angeordnet sind. Andererseits können sowohl die ersten Begrenzungselemente als auch die zweiten Begrenzungselemente auf einer von der Mittelachse des Klemmrings abgewandten Seite der Arme angeordnet sein.

Eine weitere bevorzugte Ausführungsform ist dadurch gekennzeichnet, dass die Arme eine Gruppe von zwei oder mehr ersten Armen umfassen und eine Gruppe von zwei oder mehr zweiten Armen, die kürzer als die ersten Arme sind, umfassen, wobei die ersten Begrenzungselemente auf einer von der Mittelachse des Klemmrings abgewandten Seite der ersten Arme angeordnet sind und die zweiten Begrenzungselemente auf einer von der Mittelachse des Klemmrings abgewandten Seite der zweiten Armen angeordnet sind, und wobei vorzugsweise
- die zweiten Arme auf einer der Mittelachse des Klemmrings zugewandten Seite jeweils eine Fase aufweisen, und/oder
- die zweiten Arme auf einer der Mittelachse des Klemmrings zugewandten Seite jeweils mindestens ein Krallelement mit einer in Richtung des zweiten offenen Endes des hohlzylinderförmigen Abschnitts weisenden Kante aufweisen, und/oder
- die ersten Arme mit den darauf angeordneten ersten Begrenzungselementen als Clipelemente ausgeführt sind, welche in Richtung zur Mittelachse des Klemmrings hin elastisch verbiegbar sind und vorzugsweise an einer der Mittelachse des Klemmrings abgewandten Seite eine Fase aufweisen, und/oder
- auf der Außenseite des hohlzylinderförmigen Abschnitts zusätzliche Verdrehsicherungselemente angeordnet sind, die vorzugsweise als parallel zur Mittelachse des Klemmrings verlaufende Stege ausgeführt sind.

Eine weitere bevorzugte Ausführungsform zeichnet sich dadurch aus, dass die ersten Begrenzungselemente auf einer von der Mittelachse des Klemmrings abgewandten Seite der Arme angeordnet sind, und die zweiten Begrenzungselemente auf der Außenseite des hohlzylinderförmigen Abschnitts angeordnet sind, wobei
- die Arme auf einer der Mittelachse des Klemmrings zugewandten Seite jeweils eine Fase aufweisen, und/oder
- die Arme auf einer der Mittelachse des Klemmrings zugewandten Seite jeweils mindestens ein Krallelement mit einer in Richtung des zweiten offenen Endes des hohlzylinderförmigen Abschnitts weisenden Kante aufweisen, und/oder
- die Arme mit den darauf angeordneten ersten Begrenzungselementen als Clipelemente ausgeführt sind, welche in Richtung zur Mittelachse des Klemmrings hin elastisch verbiegbar sind und vorzugsweise an einer der Mittelachse des Klemmrings abgewandten Seite eine Fase aufweisen, und/oder
- die zweiten Begrenzungselemente so ausgeführt sind, dass sie gleichzeitig als Verdrehsicherungselemente dienen.

Die vorliegende Erfindung betrifft zudem eine Klemmvorrichtung für Schlauchverbindungen, umfassend einen erfindungsgemäßen Klemmring sowie eine Befestigungsmutter, die auf den Klemmring aufgesteckt ist.

Eine solche vormontierte Klemmvorrichtung hat den Vorteil, dass anstelle von zwei losen verlierbaren Einzelteilen ein einziges zusammengesetztes Teil vorliegt. Trotzdem sind Klemmring und Befestigungsmutter nicht einstückig ausgebildet. Stattdessen, ist die Befestigungsmutter lediglich so auf den Klemmring aufgesteckt, dass eine parallel zur Mittelachse des Klemmrings verlaufende Bewegung der aufgesteckten Befestigungsmutter in beide Richtungen eingeschränkt oder verhindert wird, wohingegen eine rotatorische Bewegung der aufgesteckten Befestigungsmutter nicht eingeschränkt ist.

Eine bevorzugte Ausführungsform der erfindungsgemäßen Klemmvorrichtung zeichnet sich dadurch aus, dass die Begrenzungselemente eine Gruppe von zwei oder mehr ersten Begrenzungselementen und eine Gruppe von zwei oder mehr zweiten Begrenzungselementen umfassen, wobei die ersten Begrenzungselemente weiter vom zweiten Ende des hohlzylinderförmigen Abschnitts entfernt sind als die zweiten Begrenzungselemente, und wobei sich zwischen der Gruppe von ersten Begrenzungselementen und der Gruppe von zweiten Begrenzungselementen ein Aufnahmebereich für die Befestigungsmutter befindet, in welchem die Befestigungsmutter aufgesteckt ist. So kann auf einfache Weise erreicht werden, dass eine parallel zur Mittelachse des Klemmrings verlaufende Bewegung (d.h. eine axiale Bewegung) der auf den Klemmring aufgesteckten Befestigungsmutter in beide Richtungen eingeschränkt oder verhindert wird.

Weiterhin ist es bevorzugt, dass die ersten Begrenzungselemente auf einer von der Mittelachse des Klemmrings abgewandten Seite der Arme angeordnet sind und
- die zweiten Begrenzungselemente ebenfalls auf einer von der Mittelachse des Klemmrings abgewandten Seite der Arme angeordnet sind, wobei die Befestigungsmutter ein Innengewinde aufweist, oder
- die zweiten Begrenzungselemente auf der Außenseite des hohlzylinderförmigen Abschnitts angeordnet sind, wobei die Befestigungsmutter ein Außengewinde aufweist.

Für die Anordnung der ersten und zweiten Begrenzungselemente auf der Außenseite des Klemmrings gibt es demnach zwei bevorzugte Varianten. Einerseits können die ersten Begrenzungselemente auf einer von der Mittelachse des Klemmrings abgewandten Seite der Arme und die zweiten Begrenzungselemente auf der Außenseite des hohlzylinderförmigen Abschnitts angeordnet sind. In diesem Fall weist die Befestigungsmutter ein Außengewinde auf. Mit diesem kann sie z.B. in ein Innengewinde eines passenden einen Konus aufweisenden Grundkörpers eingeschraubt werden. Andererseits können sowohl die ersten Begrenzungselemente als auch die zweiten Begrenzungselemente auf einer von der Mittelachse des Klemmrings abgewandten Seite der Arme angeordnet sein. In diesem Fall weist die Befestigungsmutter ein Innengewinde auf. Mit diesem kann sie z.B. auf ein Außengewinde eines passenden einen Konus aufweisenden Grundkörpers aufgeschraubt werden.

In einer weiteren bevorzugten Ausführungsform der erfindungsgemäßen Klemmvorrichtung umfasst die Klemmvorrichtung einen Grundkörper mit einem Konus zum Aufstecken einer Schlauch- oder Rohrleitung und mit einem um den Konus herum angeordneten Gehäuseabschnitt, wobei
- die Befestigungsmutter ein Innengewinde aufweist, mit welchem sie auf ein Außengewinde des Gehäuseabschnitts aufgeschraubt ist, oder
- die Befestigungsmutter ein Außengewinde aufweist, mit welchem sie in ein Innengewinde des Gehäuseabschnitts eingeschraubt ist

Weiterhin ist es bevorzugt, dass sich zwischen dem Konus und dem Gehäuseabschnitt ein Ringspalt befindet, in welchem zumindest ein Teil des hohlzylinderförmigen Abschnitts des Klemmrings angeordnet ist. In diesem Ringspalt wäre dann auch ein Teil eines in den hohlzylinderförmigen Abschnitt des Klemmrings aufgenommenen Schlauchs angeordnet, wobei dieser zwischen dem Konus und dem Klemmring eingeklemmt und dadurch fixiert wäre.

Die vorliegende Erfindung betrifft zudem eine Schlauchverbindung, umfassend eine erfindungsgemäße Klemmvorichtung sowie eine Schlauch- oder Rohrleitung, welche in den hohlzylinderförmigen Abschnitt des Klemmrings aufgenommen ist.

Im Weiteren betrifft die vorliegende Erfindung auch einen Getränkebereiter umfassend eine erfindungsgemäße Schlauchverbindung. Vorzugsweise ist der Getränkebereiter ein Getränkeautomat zur Ausgabe mehrerer Heiß- und/oder Kaltgetränke, umfassend eine oder mehrere Kaffeespezialitäten, eine oder mehrere Teespezialitäten und/oder eine oder mehrere Trinksuppenspezialitäten.

Die vorliegende Erfindung betrifft auch die Verwendung eines erfindungsgemäßen Klemmrings oder einer erfindungsgemäßen Klemmvorrichtung zur fluiddichten Fixierung einer Schlauch- oder Rohrleitung für ein flüssiges Medium, vorzugsweise Milch, in einem Getränkebereiter, wobei der Getränkebereiter vorzugsweise ein Getränkeautomat zur Ausgabe mehrerer Heiß- und/oder Kaltgetränke, umfassend eine oder mehrere Kaffeespezialitäten, eine oder mehrere Teespezialitäten und/oder eine oder mehrere Trinksuppenspezialitäten, ist. Gerade bei verkeimungsanfälligen Medien, wie z.B. Milch, ist eine totraumfreie oder zumindest totraumarme Schlauchverbindung besonders vorteilhaft, da so vermieden werden kann, dass sich Reste eines solchen verkeimungsanfälligen Mediums in Toträumen ablagern und auf diese Weise Keime entstehen. Mit anderen Worten kann die Gefahr der Verkeimung verhindert oder zumindest vermindert werden.

Anhand der nachfolgenden Beispiele sowie der nachfolgenden Figuren soll die vorliegende Erfindung näher erläutert werden, ohne diese auf die hier gezeigten spezifischen Ausführungsformen und Parameter zu beschränken.

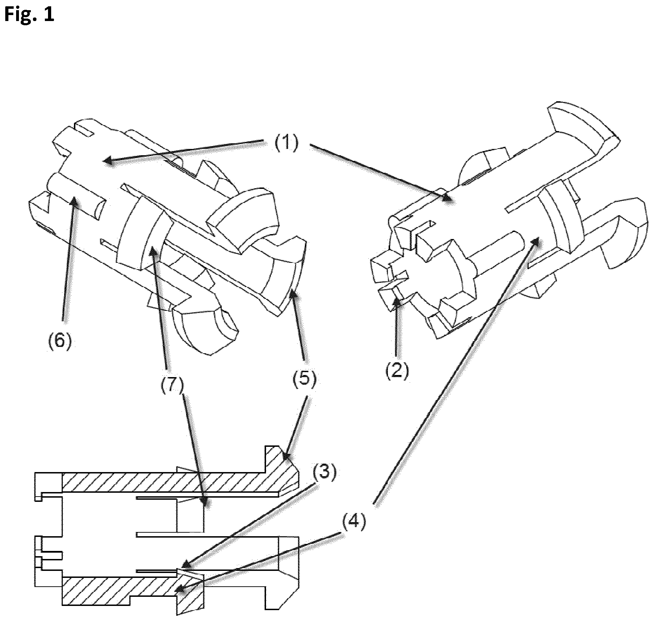

Figur 1 zeigt eine erste beispielhafte Ausführungsform des erfindungsgemäßen Klemmrings in zwei perspektivischen Ansichten und einer QuerschnittAnsicht. Der Klemmring enthält einen um eine Mittelache des Klemmrings angeordneten hohlzylinderförmigen Abschnitt 1 zur Aufnahme einer Schlauch- oder Rohrleitung und sechs Arme 4, die parallel zur Mittelachse des Klemmrings von einem ersten offenen Ende des hohlzylinderförmigen Abschnitts 1 abstehen. Bei den Armen 4 handelt es sich um Federarme, die zur Mittelachse des Klemmrings hin und/oder von der Mittelachse des Klemmrings weg elastisch verbiegbar sind. Die Arme 4 umfassen eine Gruppe von drei ersten Armen und eine Gruppe von drei zweiten Armen, wobei die zweiten Arme kürzer als die ersten Arme sind.

An einem zweiten offenen Ende des hohlzylinderförmigen Abschnitts 1 sind sechs Stoppelemente 2 zur Verhinderung eines vollständigen Durchsteckens einer Schlauch- oder Rohrleitung durch den hohlzylinderförmigen Abschnitt 1 angeordnet. Die Stoppelemente 2 sind dabei auf der Innenseite des hohlzylinderförmigen Abschnitts 1 entlang der Kante des zweiten offenen Endes des hohlzylinderförmigen Abschnitts 1 angeordnet. Der hohlzylinderförmige Abschnitt 1 weist hierbei drei große und drei kleine Aussparungen an seinem zweiten offenen Ende auf, wobei die Stoppelemente 2 in Bereichen ohne Aussparungen angeordnet sind.

Auf der Außenseite des Klemmrings sind insgesamt sechs Begrenzungselemente 5, 7 angeordnet, die zumindest abschnittsweise um die Mittelachse des Klemmrings verlaufen und so angeordnet sind, dass eine parallel zur Mittelachse des Klemmrings verlaufende Bewegung einer auf den Klemmring aufgesteckten Befestigungsmutter in beide Richtungen eingeschränkt oder verhindert wird. Die sechs Begrenzungselemente 5, 7 umfassen eine Gruppe von drei ersten Begrenzungselementen 5 und eine Gruppe von drei zweiten Begrenzungselementen 7, wobei die ersten Begrenzungselemente 5 weiter vom zweiten Ende des hohlzylinderförmigen Abschnitts 1 entfernt sind als die zweiten Begrenzungselemente 7. Zwischen der Gruppe von ersten Begrenzungselementen 5 und der Gruppe von zweiten Begrenzungselementen 7 ist ein Aufnahmebereich für eine aufzusteckende Befestigungsmutter angeordnet ist. Die ersten Begrenzungselemente 5 sind auf einer von der Mittelachse des Klemmrings abgewandten Seite der ersten (längeren) Arme angeordnet sind und die zweiten Begrenzungselemente 7 sind auf einer von der Mittelachse des Klemmrings abgewandten Seite der zweiten (kürzeren) Armen angeordnet.

Die ersten (längeren) Arme mit den darauf angeordneten ersten Begrenzungselementen 5 sind als Clipelemente ausgeführt, welche in Richtung zur Mittelachse des Klemmrings hin elastisch verbiegbar sind und an einer der Mittelachse des Klemmrings abgewandten Seite eine Fase aufweisen.

Die zweiten (kürzeren) Arme weisen auf einer der Mittelachse des Klemmrings zugewandten Seite jeweils ein Krallelement 3 mit einer in Richtung des zweiten offenen Endes des hohlzylinderförmigen Abschnitts 1 weisenden Kante auf. Zudem weisen die zweiten Arme auf der Mittelachse des Klemmrings zugewandten Seite jeweils eine Fase auf, wobei sich die Kante des Krallelements 3 jeweils am Ende der Fase befindet.

Auf der Außenseite des hohlzylinderförmigen Abschnitts 1 sind zusätzliche Verdrehsicherungselemente 6 angeordnet sind, die als parallel zur Mittelachse des Klemmrings verlaufende Stege ausgeführt sind.

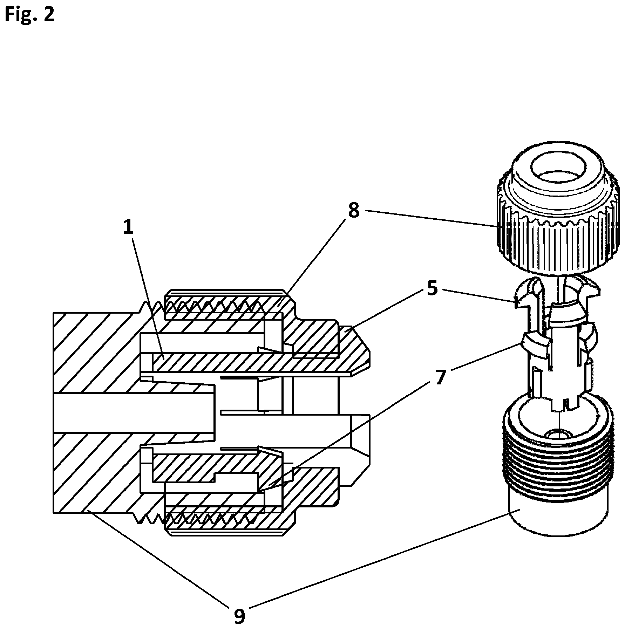

Figur 2 zeigt die erste beispielhafte Ausführungsform des erfindungsgemäßen Klemmrings aus Figur 1 in Kombination mit einer Befestigungsmutter 8 und einem Grundkörper 9 in zwei verschiedenen Ansichten. Rechts ist eine perspektivische Ansicht mit den drei einzelnen voneinander getrennten Elementen (d.h. Klemmring, Befestigungsmutter 8 und Grundkörper 9) gezeigt. Links ist eine Querschnitts-Ansicht von den drei zusammengesetzten Elementen gezeigt, die in dieser Form eine beispielhafte Ausführungsform der erfindungsgemäßen Klemmvorrichtung darstellen.

Der Grundkörper 9 umfasst einen Konus zum Aufstecken einer Schlauch- oder Rohrleitung und einen um den Konus herum angeordneten Gehäuseabschnitt. Zwischen dem Konus und dem Gehäuseabschnitt befindet sich ein Ringspalt, in welchem zumindest ein Teil des hohlzylinderförmigen Abschnitts 1 des Klemmrings angeordnet ist.

Die Befestigungsmutter 8 ist im Aufnahmebereich, der sich zwischen der Gruppe von ersten Begrenzungselementen 5 und der Gruppe von zweiten Begrenzungselementen 7 befindet, auf den Klemmring aufgesteckt. Zudem weist die Befestigungsmutter 8 ein Innengewinde auf, mit welchem sie auf ein Außengewinde des Gehäuseabschnitts 9 aufgeschraubt ist.

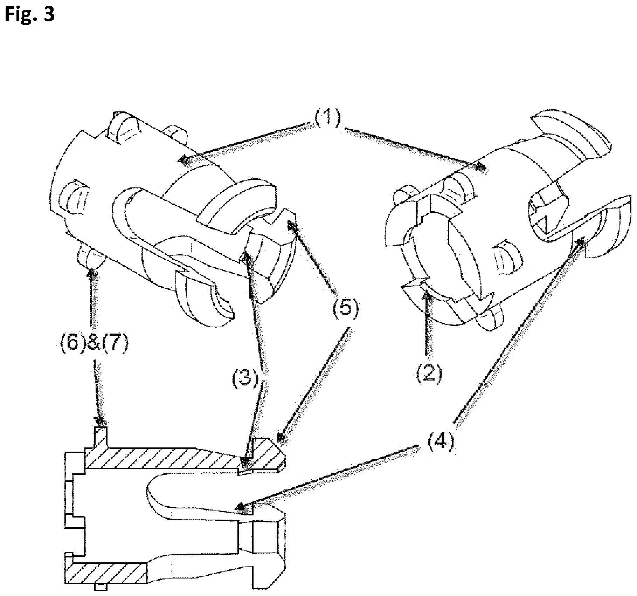

Figur 3 zeigt eine zweite beispielhafte Ausführungsform des erfindungsgemäßen Klemmrings in zwei perspektivischen Ansichten und einer QuerschnittAnsicht. Der Klemmring enthält hier einen um eine Mittelache des Klemmrings angeordneten hohlzylinderförmigen Abschnitt 1 zur Aufnahme einer Schlauch- oder Rohrleitung und drei Arme 4, die parallel zur Mittelachse des Klemmrings von einem ersten offenen Ende des hohlzylinderförmigen Abschnitts 1 abstehen. Bei den Armen 4 handelt es sich um Federarme, die zur Mittelachse des Klemmrings hin und/oder von der Mittelachse des Klemmrings weg elastisch verbiegbar sind.

An einem zweiten offenen Ende des hohlzylinderförmigen Abschnitts 1 sind drei Stoppelemente 2 zur Verhinderung eines vollständigen Durchsteckens einer Schlauch- oder Rohrleitung durch den hohlzylinderförmigen Abschnitt 1 angeordnet. Die Stoppelemente 2 sind dabei auf der Innenseite des hohlzylinderförmigen Abschnitts 1 entlang der Kante des zweiten offenen Endes des hohlzylinderförmigen Abschnitts 1 angeordnet. Der hohlzylinderförmige Abschnitt 1 weist hierbei drei Aussparungen an seinem zweiten offenen Ende auf, wobei die Stoppelemente 2 in Bereichen ohne Aussparungen angeordnet sind.

Auf der Außenseite des Klemmrings sind insgesamt acht Begrenzungselemente 5, 7 angeordnet, die zumindest abschnittsweise um die Mittelachse des Klemmrings verlaufen und so angeordnet sind, dass eine parallel zur Mittelachse des Klemmrings verlaufende Bewegung einer auf den Klemmring aufgesteckten Befestigungsmutter in beide Richtungen eingeschränkt oder verhindert wird. Die acht Begrenzungselemente 5, 7 umfassen eine Gruppe von drei ersten Begrenzungselementen 5 und eine Gruppe von fünf zweiten Begrenzungselementen 7, wobei die ersten Begrenzungselemente 5 weiter vom zweiten Ende des hohlzylinderförmigen Abschnitts 1 entfernt sind als die zweiten Begrenzungselemente 7. Zwischen der Gruppe von ersten Begrenzungselementen 5 und der Gruppe von zweiten Begrenzungselementen 7 ist ein Aufnahmebereich für eine aufzusteckende Befestigungsmutter angeordnet ist. Die ersten Begrenzungselemente 5 sind auf einer von der Mittelachse des Klemmrings abgewandten Seite der Arme 4 angeordnet sind und die zweiten Begrenzungselemente 7 sind auf der Außenseite des hohlzylinderförmigen Abschnitts 1 angeordnet.

Die Arme 4 mit den darauf angeordneten ersten Begrenzungselementen 5 sind als Clipelemente ausgeführt, welche in Richtung zur Mittelachse des Klemmrings hin elastisch verbiegbar sind und an einer der Mittelachse des Klemmrings abgewandten Seite eine Fase aufweisen.

Die Arme 4 weisen auf einer der Mittelachse des Klemmrings zugewandten Seite jeweils ein Krallelement 3 mit einer in Richtung des zweiten offenen Endes des hohlzylinderförmigen Abschnitts 1 weisenden Kante auf. Zudem weisen die Arme 4 auf der der Mittelachse des Klemmrings zugewandten Seite jeweils eine Fase auf, wobei sich die Kante des Krallelements 3 jeweils am Ende der Fase befindet.

Die zweiten Begrenzungselemente 7 sind so ausgeführt sind, dass sie gleichzeitig als Verdrehsicherungselemente 6 dienen.

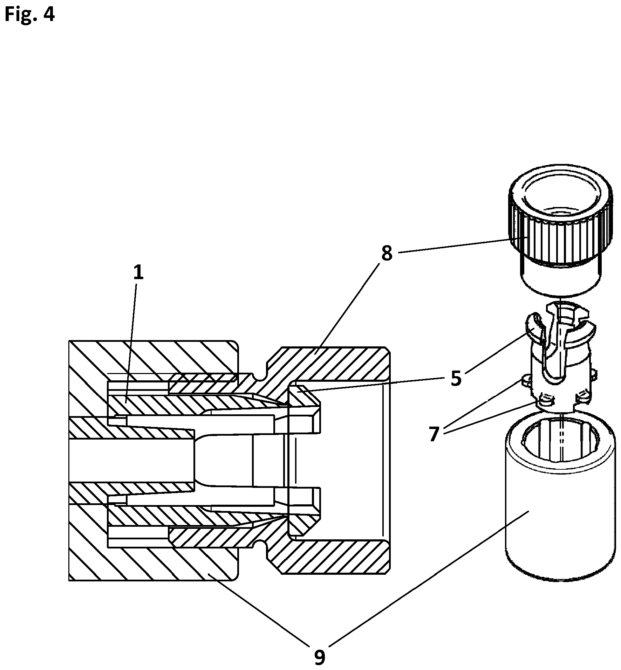

Figur 4 zeigt die zweite beispielhafte Ausführungsform des erfindungsgemäßen Klemmrings in Kombination mit einer Befestigungsmutter 8 und einem Grundkörper 9 in zwei verschiedenen Ansichten. Rechts ist eine perspektivische Ansicht mit den drei einzelnen voneinander getrennten Elementen (d.h. Klemmring, Befestigungsmutter 8 und Grundkörper 9) gezeigt. Links ist eine Querschnitts-Ansicht von den drei zusammengesetzten Elementen gezeigt, die in dieser Form eine weitere beispielhafte Ausführungsform der erfindungsgemäßen Klemmvorrichtung darstellen.

Der Grundkörper 9 umfasst einen Konus zum Aufstecken einer Schlauch- oder Rohrleitung und einen um den Konus herum angeordneten Gehäuseabschnitt. Zwischen dem Konus und dem Gehäuseabschnitt befindet sich ein Ringspalt, in welchem zumindest ein Teil des hohlzylinderförmigen Abschnitts 1 des Klemmrings angeordnet ist.

Die Befestigungsmutter 8 ist im Aufnahmebereich, der sich zwischen der Gruppe von ersten Begrenzungselementen 5 und der Gruppe von zweiten Begrenzungselementen 7 befindet, auf den Klemmring aufgesteckt. Zudem weist die Befestigungsmutter 8 ein Außengewinde auf, mit welchem sie in ein Innengewinde des Gehäuseabschnitts 9 eingeschraubt ist.

## Patentansprüche

1. Klemmring für Schlauchverbindungen, enthaltend einen um eine Mittelachse des Klemmrings angeordneten hohlzylinderförmigen Abschnitt (1) zur Aufnahme einer Schlauch- oder Rohrleitung und eine Mehrzahl von Armen (4), die parallel zur Mittelachse des Klemmrings von einem ersten offenen Ende des hohlzylinderförmigen Abschnitts (1) abstehen, wobei an einem zweiten offenen Ende des hohlzylinderförmigen Abschnitts (1) mindestens ein Stoppelement (2) zur Verhinderung eines vollständigen Durchsteckens einer Schlauch- oder Rohrleitung durch den hohlzylinderförmigen Abschnitt (1) angeordnet ist, und wobei auf der Außenseite des Klemmrings Begrenzungselemente (5, 7) angeordnet sind, die zumindest abschnittsweise um die Mittelachse des Klemmrings verlaufen und so angeordnet sind, dass eine parallel zur Mittelachse des Klemmrings verlaufende Bewegung einer auf den Klemmring aufgesteckten Befestigungsmutter in beide Richtungen eingeschränkt oder verhindert wird,
wobei auf mindestens zwei der Arme (4) jeweils mindestens eines der Begrenzungselemente (5) angeordnet ist, wobei diese mindestens zwei Arme mit den darauf angeordneten Begrenzungselementen (5) als Clipelemente ausgeführt sind, welche in Richtung zur Mittelachse des Klemmrings hin elastisch verbiegbar sind,
**dadurch gekennzeichnet, dass**
die Begrenzungselemente eine Gruppe von zwei oder mehr ersten Begrenzungselementen (5) und eine Gruppe von zwei oder mehr zweiten Begrenzungselementen (7) umfassen, wobei die ersten Begrenzungselemente (5) weiter vom zweiten Ende des hohlzylinderförmigen Abschnitts (1) entfernt sind als die zweiten Begrenzungselemente (7), und wobei zwischen der Gruppe von ersten Begrenzungselementen (5) und der Gruppe von zweiten Begrenzungselementen (7) ein Aufnahmebereich für eine aufzusteckende Befestigungsmutter angeordnet ist.

2. Klemmring gemäß dem vorhergehenden Anspruch, **dadurch gekennzeichnet, dass** es sich bei den Armen (4) um Federarme handelt, die vorzugsweise zur Mittelachse des Klemmrings hin und/oder von der Mittelachse des Klemmrings weg elastisch verbiegbar sind.

3. Klemmring gemäß einem der vorhergehenden Ansprüche, **dadurch gekennzeichnet, dass** mindestens zwei der Arme (4), bevorzugt mindestens drei der Arme (4), auf einer der Mittelachse des Klemmrings zugewandten Seite jeweils mindestens ein Krallelement (3) mit einer in Richtung des zweiten offenen Endes des hohlzylinderförmigen Abschnitts weisenden Kante aufweisen.

4. Klemmring gemäß einem der vorhergehenden Ansprüche, **dadurch gekennzeichnet, dass** mindestens zwei der Arme (4), bevorzugt mindestens drei der Arme (4), auf einer der Mittelachse des Klemmrings zugewandten Seite jeweils eine Fase aufweisen.

5. Klemmring gemäß einem der vorhergehenden Ansprüche, **dadurch gekennzeichnet, dass** die Clipelemente an einer der Mittelachse des Klemmrings abgewandten Seite eine Fase aufweisen.

6. Klemmring gemäß einem der vorhergehenden Ansprüche, **dadurch gekennzeichnet, dass** das mindestens eine Stoppelement (2) auf der Innenseite des hohlzylinderförmigen Abschnitts (1) entlang einer Kante des zweiten offenen Endes des hohlzylinderförmigen Abschnitts (1) angeordnet ist.

7. Klemmring gemäß einem der vorhergehenden Ansprüche, **dadurch gekennzeichnet, dass**
- auf der Außenseite des hohlzylinderförmigen Abschnitts (1) zusätzliche Verdrehsicherungselemente (6) angeordnet sind, die vorzugsweise als parallel zur Mittelachse des Klemmrings verlaufende Stege ausgeführt sind, oder
- mindestens zwei der Begrenzungselemente (7) so ausgeführt sind, dass sie zusätzlich als Verdrehsicherungselemente (6) dienen.

8. Klemmring gemäß einem der vorhergehenden Ansprüche, **dadurch gekennzeichnet, dass** die ersten Begrenzungselemente (5) auf einer von der Mittelachse des Klemmrings abgewandten Seite der Arme (4) angeordnet sind und die zweiten Begrenzungselemente (7)
- ebenfalls auf einer von der Mittelachse des Klemmrings abgewandten Seite der Arme (4) oder
- auf der Außenseite des hohlzylinderförmigen Abschnitts (1) angeordnet sind.

9. Klemmring gemäß einem der vorhergehenden Ansprüche, **dadurch gekennzeichnet, dass** die Arme (4) eine Gruppe von zwei oder mehr ersten Armen umfassen und eine Gruppe von zwei oder mehr zweiten Armen, die kürzer als die ersten Arme sind, umfassen, wobei die ersten Begrenzungselemente (5) auf einer von der Mittelachse des Klemmrings abgewandten Seite der ersten Arme angeordnet sind und die zweiten Begrenzungselemente (7) auf einer von der Mittelachse des Klemmrings abgewandten Seite der zweiten Armen angeordnet sind, und wobei vorzugsweise
- die zweiten Arme auf einer der Mittelachse des Klemmrings zugewandten Seite jeweils eine Fase aufweisen, und/oder
- die zweiten Arme auf einer der Mittelachse des Klemmrings zugewandten Seite jeweils mindestens ein Krallelement (3) mit einer in Richtung des zweiten offenen Endes des hohlzylinderförmigen Abschnitts (1) weisenden Kante aufweisen, und/oder
- die ersten Arme mit den darauf angeordneten ersten Begrenzungselementen (5) als Clipelemente ausgeführt sind, welche in Richtung zur Mittelachse des Klemmrings hin elastisch verbiegbar sind und vorzugsweise an einer der Mittelachse des Klemmrings abgewandten Seite eine Fase aufweisen, und/oder
- auf der Außenseite des hohlzylinderförmigen Abschnitts (1) zusätzliche Verdrehsicherungselemente (6) angeordnet sind, die vorzugsweise als parallel zur Mittelachse des Klemmrings verlaufende Stege ausgeführt sind.

10. Klemmring gemäß einem der vorhergehenden Ansprüche, **dadurch gekennzeichnet, dass** die ersten Begrenzungselemente (5) auf einer von der Mittelachse des Klemmrings abgewandten Seite der Arme (4) angeordnet sind, und die zweiten Begrenzungselemente (7) auf der Außenseite des hohlzylinderförmigen Abschnitts (1) angeordnet sind, wobei
- die Arme (4) auf einer der Mittelachse des Klemmrings zugewandten Seite jeweils eine Fase aufweisen, und/oder
- die Arme (4) auf einer der Mittelachse des Klemmrings zugewandten Seite jeweils mindestens ein Krallelement (3) mit einer in Richtung des zweiten offenen Endes des hohlzylinderförmigen Abschnitts weisenden Kante aufweisen, und/oder
- die Arme (4) mit den darauf angeordneten ersten Begrenzungselementen (5) als Clipelemente ausgeführt sind, welche in Richtung zur Mittelachse des Klemmrings hin elastisch verbiegbar sind und vorzugsweise an einer der Mittelachse des Klemmrings abgewandten Seite eine Fase aufweisen, und/oder
- die zweiten Begrenzungselemente (7) so ausgeführt sind, dass sie gleichzeitig als Verdrehsicherungselemente (6) dienen.

11. Klemmvorrichtung für Schlauchverbindungen, umfassend einen Klemmring gemäß einem der Ansprüche 1 bis 10 sowie eine Befestigungsmutter (8), die auf den Klemmring aufgesteckt ist.

12. Klemmvorrichtung gemäß Anspruch 11, **dadurch gekennzeichnet, dass** die Begrenzungselemente eine Gruppe von zwei oder mehr ersten Begrenzungselementen (5) und eine Gruppe von zwei oder mehr zweiten Begrenzungselementen (7) umfassen, wobei die ersten Begrenzungselemente (5) weiter vom zweiten Ende des hohlzylinderförmigen Abschnitts (1) entfernt sind als die zweiten Begrenzungselemente (7), und wobei sich zwischen der Gruppe von ersten Begrenzungselementen (5) und der Gruppe von zweiten Begrenzungselementen (7) ein Aufnahmebereich für die Befestigungsmutter (8) befindet, in welchem die Befestigungsmutter (8) aufgesteckt ist.

13. Klemmvorrichtung gemäß Anspruch 12, **dadurch gekennzeichnet, dass** die ersten Begrenzungselemente (5) auf einer von der Mittelachse des Klemmrings abgewandten Seite der Arme (4) angeordnet sind und
- die zweiten Begrenzungselemente (7) ebenfalls auf einer von der Mittelachse des Klemmrings abgewandten Seite der Arme (4) angeordnet sind, wobei die Befestigungsmutter (8) ein Innengewinde aufweist, oder
- die zweiten Begrenzungselemente (7) auf der Außenseite des hohlzylinderförmigen Abschnitts (1) angeordnet sind, wobei die Befestigungsmutter (8) ein Außengewinde aufweist.

14. Klemmvorrichtung gemäß einem der Ansprüche 11 bis 13, **dadurch gekennzeichnet, dass** die Klemmvorrichtung einen Grundkörper (9) mit einem Konus zum Aufstecken einer Schlauch- oder Rohrleitung und mit einem um den Konus herum angeordneten Gehäuseabschnitt umfasst, wobei
- die Befestigungsmutter (8) ein Innengewinde aufweist, mit welchem sie auf ein Außengewinde des Gehäuseabschnitts aufgeschraubt ist, oder
- die Befestigungsmutter (8) ein Außengewinde aufweist, mit welchem sie in ein Innengewinde des Gehäuseabschnitts eingeschraubt ist.

15. Klemmvorrichtung gemäß Anspruch 14, **dadurch gekennzeichnet, dass** sich zwischen dem Konus und dem Gehäuseabschnitt ein Ringspalt befindet, in welchem zumindest ein Teil des hohlzylinderförmigen Abschnitts (1) des Klemmrings angeordnet ist.

16. Schlauchverbindung, umfassend eine Klemmvorrichtung gemäß einem der Ansprüche 11 bis 15 sowie eine Schlauch- oder Rohrleitung, welche in den hohlzylinderförmigen Abschnitt (1) des Klemmrings aufgenommen ist.

17. Getränkebereiter umfassend eine Schlauchverbindung gemäß Anspruch 16, wobei der Getränkebereiter vorzugsweise ein Getränkeautomat zur Ausgabe mehrerer Heiß- und/oder Kaltgetränke, umfassend eine oder mehrere Kaffeespezialitäten, eine oder mehrere Teespezialitäten und/oder eine oder mehrere Trinksuppenspezialitäten, ist.

18. Verwendung eines Klemmrings gemäß einem der Ansprüche 1 bis 10 oder einer Klemmvorrichtung gemäß einem der Ansprüche 11 bis 15 zur fluiddichten Fixierung einer Schlauch- oder Rohrleitung für ein flüssiges Medium, vorzugsweise Milch, in einem Getränkebereiter, wobei der Getränkebereiter vorzugsweise ein Getränkeautomat zur Ausgabe mehrerer Heiß- und/oder Kaltgetränke, umfassend eine oder mehrere Kaffeespezialitäten, eine oder mehrere Teespezialitäten und/oder eine oder mehrere Trinksuppenspezialitäten, ist.

## Claims

1. A clamping ring for hose connections, including a hollow-cylinder shaped section (1) arranged around a central axis of the clamping ring for receiving a hose or pipe line and a plurality of arms (4) projecting in parallel to the central axis of the clamping ring from a first open end of the hollow-cylinder shaped section (1), wherein at least one stop element (2) for preventing a hose or pipe line from being pushed completely through the hollow-cylinder shaped section (1) is arranged at a second open end of the hollow-cylinder shaped section (1), and wherein limiting elements (5, 7) are arranged on the outside of the clamping ring, which limiting elements extend at least in sections around the central axis of the clamping ring and are arranged in such a way that a movement, extending in parallel to the central axis of the clamping ring, of a fastening nut mounted onto the clamping ring is limited or prevented in both directions,
wherein at least one of the limiting elements (5) is arranged on each of at least two of the arms (4), wherein these at least two arms with the limiting elements (5) arranged thereon are designed as clip elements which are elastically bendable in the direction towards the central axis of the clamping ring,
**characterized in that** the limiting elements comprise a group of two or more first limiting elements (5) and a group of two or more second limiting elements (7), wherein the first limiting elements (5) are further away from the second end of the hollow-cylinder shaped section (1) than the second limiting elements (7), and wherein between the group of first limiting elements (5) and the group of second limiting elements (7) a receiving area for a fastening nut to be mounted is arranged.

2. The clamping ring according to the preceding claim, **characterized in that** the arms (4) are spring arms which are preferably elastically bendable towards the central axis of the clamping ring and/or away from the central axis of the clamping ring.

3. The clamping ring according to one of the preceding claims, **characterized in that** at least two of the arms (4), preferably at least three of the arms (4), each have, on a side facing the central axis of the clamping ring, at least one claw element (3) with an edge pointing in the direction of the second open end of the hollow-cylinder shaped section.

4. The clamping ring according to one of the preceding claims, **characterized in that** at least two of the arms (4), preferably at least three of the arms (4), each have a chamfer on a side facing the central axis of the clamping ring.

5. The clamping ring according to one of the preceding claims, **characterized in that** the clip elements have a chamfer on a side facing away from the center axis of the clamping ring.

6. The clamping ring according to one of the preceding claims, **characterized in that** the at least one stop element (2) is arranged on the inner side of the hollow-cylinder shaped portion (1) along an edge of the second open end of the hollow-cylinder shaped portion (1).

7. The clamping ring according to one of the preceding claims, **characterized in that**
- additional anti-rotation elements (6) are arranged on the outside of the hollow-cylinder shaped section (1), which are preferably designed as bars running in parallel to the central axis of the clamping ring, or
- at least two of the limiting elements (7) are designed in such a way that they additionally serve as anti-rotation elements (6).

8. The clamping ring according to one of the preceding claims, **characterized in that** the first limiting elements (5) are arranged on a side of the arms (4) facing away from the central axis of the clamping ring, and the second limiting elements (7) are arranged
- on a side of the arms (4) facing away from the center axis of the clamping ring as well or
- on the outside of the hollow-cylinder shaped section (1).

9. The clamping ring according to one of the preceding claims, **characterized in that** the arms (4) comprise a group of two or more first arms and comprise a group of two or more second arms shorter than the first arms, wherein the first limiting elements (5) are arranged on a side of the first arms facing away from the central axis of the clamping ring and the second limiting elements (7) are arranged on a side of the second arms facing away from the central axis of the clamping ring, and wherein preferably
- the second arms each have a chamfer on a side facing the central axis of the clamping ring, and/or
- the second arms each have at least one claw element (3) with an edge pointing in the direction of the second open end of the hollow-cylinder shaped section (1), on a side facing the central axis of the clamping ring, and/or
- the first arms with the first limiting elements (5) arranged thereon are designed as clip elements which are elastically bendable in the direction towards the central axis of the clamping ring and preferably have a chamfer on a side facing away from the central axis of the clamping ring, and/or
- additional anti-rotation elements (6) are arranged on the outside of the hollow-cylinder shaped section (1), which are preferably designed as bars running in parallel to the central axis of the clamping ring.

10. The clamping ring according to one of the preceding claims, **characterized in that** the first limiting elements (5) are arranged on a side of the arms (4) facing away from the central axis of the clamping ring, and the second limiting elements (7) are arranged on the outside of the hollow-cylinder shaped section (1), wherein
- the arms (4) each have a chamfer on a side facing the central axis of the clamping ring, and/or
- the arms (4) each have at least one claw element (3) with an edge pointing in the direction of the second open end of the hollow-cylinder shaped section, on a side facing the central axis of the clamping ring, and/or
- the arms (4) with the first limiting elements (5) arranged thereon are designed as clip elements which are elastically bendable in the direction towards the central axis of the clamping ring and preferably have a chamfer on a side facing away from the central axis of the clamping ring, and/or
- the second limiting elements (7) are designed in such a way that they simultaneously serve as anti-rotation elements (6).

11. A clamping device for hose connections, comprising a clamping ring according to one of claims 1 to 10 and a fastening nut (8) mounted on the clamping ring.

12. The clamping device according to claim 11, **characterized in that** the limiting elements comprise a group of two or more first limiting elements (5) and a group of two or more second limiting elements (7), wherein the first limiting elements (5) are further away from the second end of the hollow-cylinder shaped section (1) than the second limiting elements (7), and wherein between the group of first limiting elements (5) and the group of second limiting elements (7) a receiving area for the fastening nut (8) is arranged, where the fastening nut (8) is mounted.

13. The clamping device according to claim 12, **characterized in that** the first limiting elements (5) are arranged on a side of the arms (4) facing away from the central axis of the clamping ring, and
- the second limiting elements (7) are also arranged on a side of the arms (4) facing away from the central axis of the clamping ring, the fastening nut (8) having an internal thread, or
- the second limiting elements (7) are arranged on the outside of the hollow-cylinder shaped section (1), the fastening nut (8) having an external thread.

14. The clamping device according to one of claims 11 to 13, **characterized in that** the clamping device comprises a base body (9) having a cone for mounting a hose or pipe line and having a housing portion arranged around the cone, wherein
- the fastening nut (8) has an internal thread with which it is screwed onto an external thread of the housing portion, or
- the fastening nut (8) has an external thread with which it is screwed into an internal thread of the housing portion.

15. The clamping device according to claim 14, **characterized in that** between the cone and the housing portion there is an annular gap in which at least a part of the hollow-cylinder shaped section (1) of the clamping ring is arranged.

16. A hose connection, comprising a clamping device according to one of claims 11 to 15, and a hose or pipe line received in the hollow-cylinder shaped portion (1) of the clamping ring.

17. A beverage maker, comprising a hose connection according to claim 16, wherein the beverage maker is preferably a beverage machine for dispensing a plurality of hot and/or cold beverages comprising one or more specialty coffees, one or more specialty teas, and/or one or more specialty drink soups.

18. Use of a clamping ring according to one of claims 1 to 10 or a clamping device according to any one of claims 11 to 15 for fluid-tight fixing of a hose or pipe line for a liquid medium, preferably milk, in a beverage maker, wherein the beverage maker comprises preferably a beverage machine for dispensing a plurality of hot and/or cold beverages comprising one or more specialty coffees, one or more specialty teas, and/or one or more specialty drink soups.

## Revendications

1. Bague de serrage pour raccords de tuyaux, contenant une section en forme de cylindre creux (1) disposée autour d'un axe central de la bague de serrage et destinée à recevoir un tuyau ou un tube et une pluralité de bras (4) qui font saillie parallèlement à l'axe central de la bague de serrage à partir d'une première extrémité ouverte de la section en forme de cylindre creux (1), dans laquelle au moins un élément d'arrêt (2) est disposé sur une deuxième extrémité ouverte de la section en forme de cylindre creux (1) afin d'empêcher un passage complet d'un tuyau ou d'un tube à travers la section en forme de cylindre creux (1), et dans laquelle des éléments de limitation (5, 7) sont disposés sur le côté extérieur de la bague de serrage, qui s'étendent au moins par sections autour de l'axe central de la bague de serrage et sont disposés de telle sorte qu'un mouvement s'étendant parallèlement à l'axe central de la bague de serrage d'un écrou de fixation enfiché sur la bague de serrage est limité ou empêché dans les deux directions,
dans laquelle respectivement au moins un des éléments de limitation (5) est disposé sur au moins deux des bras (4), dans laquelle ces au moins deux bras avec les éléments de limitation (5) disposés dessus sont réalisés sous forme d'éléments de clips, lesquels peuvent être déformés élastiquement en direction de l'axe central de la bague de serrage,
**caractérisée en ce que** les éléments de limitation comprennent un groupe de deux premiers éléments de limitation (5) ou plus et un groupe de deux deuxièmes éléments de limitation (7) ou plus, dans laquelle les premiers éléments de limitation (5) sont plus éloignés de la deuxième extrémité de la section en forme de cylindre creux (1) que les deuxièmes éléments de limitation (7), et dans laquelle une zone de réception pour un écrou de fixation à enficher est disposée entre le groupe de premiers éléments de limitation (5) et le groupe de deuxièmes éléments de limitation (7).

2. Bague de serrage selon la revendication précédente, **caractérisée en ce que** les bras (4) sont des bras élastiques qui peuvent être déformés élastiquement, de préférence vers l'axe central de la bague de serrage et/ou en s'éloignant de l'axe central de la bague de serrage.

3. Bague de serrage selon l'une quelconque des revendications précédentes, **caractérisée en ce qu'**au moins deux des bras (4), de préférence au moins trois des bras (4), présentent chacun, sur un côté tourné vers l'axe central de la bague de serrage, au moins un élément de griffe (3) avec un bord orienté en direction de la deuxième extrémité ouverte de la section en forme de cylindre creux.

4. Bague de serrage selon l'une quelconque des revendications précédentes, **caractérisée en ce qu'**au moins deux des bras (4), de préférence au moins trois des bras (4), présentent chacun un chanfrein sur un côté tourné vers l'axe central de la bague de serrage.

5. Bague de serrage selon l'une quelconque des revendications précédentes, **caractérisée en ce que** les éléments de clip présentent un chanfrein sur un côté opposé à l'axe central de la bague de serrage.

6. Bague de serrage selon l'une quelconque des revendications précédentes, **caractérisée en ce que** le au moins un élément d'arrêt (2) est disposé sur le côté intérieur de la section en forme de cylindre creux (1) le long d'un bord de la deuxième extrémité ouverte de la section en forme de cylindre creux (1).

7. Bague de serrage selon l'une quelconque des revendications précédentes, **caractérisée en ce que**
- sur le côté extérieur de la section en forme de cylindre creux (1) sont disposés des éléments anti-rotation (6) supplémentaires, qui sont réalisés de préférence sous forme de nervures s'étendant parallèlement à l'axe central de la bague de serrage, ou
- au moins deux des éléments de limitation (7) sont réalisés de telle sorte qu'ils servent en outre d'éléments anti-rotation (6).

8. Bague de serrage selon l'une quelconque des revendications précédentes, **caractérisée en ce que** les premiers éléments de limitation (5) sont disposés sur un côté des bras (4) opposé à l'axe central de la bague de serrage et les deuxièmes éléments de limitation (7) sont disposés
- également sur un côté des bras (4) opposé à l'axe central de la bague de serrage ou
- sur le côté extérieur de la section en forme de cylindre creux (1).

9. Bague de serrage selon l'une quelconque des revendications précédentes, **caractérisée en ce que** les bras (4) comprennent un groupe de deux premiers bras ou plus et comprennent un groupe de deux deuxièmes bras ou plus qui sont plus courts que les premiers bras, dans laquelle les premiers éléments de limitation (5) sont disposés sur un côté des premiers bras opposé à l'axe central de la bague de serrage et les deuxièmes éléments de limitation (7) sont disposés sur un côté des deuxièmes bras opposé à l'axe central de la bague de serrage, et dans laquelle de préférence
- les deuxièmes bras présentent chacun un chanfrein sur un côté tourné vers l'axe central de la bague de serrage, et/ou
- les deuxièmes bras présentent chacun, sur un côté tourné vers l'axe central de la bague de serrage, au moins un élément de griffe (3) avec un bord orienté en direction de la deuxième extrémité ouverte de la section en forme de cylindre creux (1), et/ou
- les premiers bras avec les premiers éléments de délimitation (5) disposés sur ceux-ci sont réalisés sous forme d'éléments de clips qui peuvent être déformés élastiquement en direction de l'axe central de la bague de serrage et présentent de préférence un chanfrein sur un côté opposé à l'axe central de la bague de serrage, et/ou
- sur le côté extérieur de la section en forme de cylindre creux (1) sont disposés des éléments anti-rotation (6) supplémentaires, qui sont réalisés de préférence sous forme de nervures s'étendant parallèlement à l'axe central de la bague de serrage.

10. Bague de serrage selon l'une quelconque des revendications précédentes, **caractérisée en ce que** les premiers éléments de limitation (5) sont disposés sur un côté des bras (4) opposé à l'axe central de la bague de serrage, et les deuxièmes éléments de limitation (7) sont disposés sur le côté extérieur de la section en forme de cylindre creux (1), dans laquelle
- les bras (4) présentent chacun un chanfrein sur un côté tourné vers l'axe central de la bague de serrage, et/ou
- les bras (4) présentent chacun, sur un côté tourné vers l'axe central de la bague de serrage, au moins un élément de griffe (3) avec un bord orienté en direction de la deuxième extrémité ouverte de la section en forme de cylindre creux, et/ou
- les bras (4) avec les premiers éléments de délimitation (5) disposés sur ceux-ci sont réalisés sous forme d'éléments de clips qui peuvent être déformés élastiquement en direction de l'axe central de la bague de serrage et présentent de préférence un chanfrein sur un côté opposé à l'axe central de la bague de serrage, et/ou
- les deuxièmes éléments de limitation (7) sont réalisés de telle sorte qu'ils servent en même temps d'éléments anti-rotation (6).

11. Dispositif de serrage pour raccords de tuyaux, comprenant une bague de serrage selon l'une quelconque des revendications 1 à 10 ainsi qu'un écrou de fixation (8) qui est enfiché sur la bague de serrage.

12. Dispositif de serrage selon la revendication 11, **caractérisé en ce que** les éléments de limitation comprennent un groupe de deux premiers éléments de limitation (5) ou plus et un groupe de deux deuxièmes éléments de limitation (7) ou plus, dans lequel les premiers éléments de limitation (5) sont plus éloignés de la deuxième extrémité de la section en forme de cylindre creux (1) que les deuxièmes éléments de limitation (7), et dans lequel entre le groupe de premiers éléments de limitation (5) et le groupe de deuxièmes éléments de limitation (7) se trouve une zone de réception pour l'écrou de fixation (8), dans laquelle l'écrou de fixation (8) est enfiché.

13. Dispositif de serrage selon la revendication 12, **caractérisé en ce que** les premiers éléments de limitation (5) sont disposés sur un côté des bras (4) opposé à l'axe central de la bague de serrage et
- les deuxièmes éléments de limitation (7) sont également disposés sur un côté des bras (4) opposé à l'axe central de la bague de serrage, dans lequel l'écrou de fixation (8) présente un filetage intérieur, ou
- les deuxièmes éléments de limitation (7) sont disposés sur le côté extérieur de la section en forme de cylindre creux (1), dans lequel l'écrou de fixation (8) présente un filetage extérieur.

14. Dispositif de serrage selon l'une quelconque des revendications 11 à 13, **caractérisé en ce que** le dispositif de serrage comprend un corps de base (9) avec un cône pour l'enfichage d'un tuyau ou d'un tube et avec une section de boîtier disposée autour du cône, dans lequel
- l'écrou de fixation (8) présente un filetage intérieur avec lequel il est vissé sur un filetage extérieur de la section de boîtier, ou
- l'écrou de fixation (8) présente un filetage extérieur avec lequel il est vissé dans un filetage intérieur de la section de boîtier.

15. Dispositif de serrage selon la revendication 14, **caractérisé en ce qu'**entre le cône et la section de boîtier se trouve une fente annulaire dans laquelle est disposée au moins une partie de la section en forme de cylindre creux (1) de la bague de serrage.

16. Raccord de tuyau flexible comprenant un dispositif de serrage selon l'une quelconque des revendications 11 à 15, ainsi qu'un tuyau ou un tube qui est reçu dans la section en forme de cylindre creux (1) de la bague de serrage.

17. Préparateur de boissons comprenant un raccord de tuyau selon la revendication 16, dans lequel le préparateur de boissons est de préférence un distributeur automatique de boissons pour la distribution de plusieurs boissons chaudes et/ou froides, comprenant une ou plusieurs spécialités de café, une ou plusieurs spécialités de thé et/ou une ou plusieurs spécialités de soupe à boire.

18. Utilisation d'une bague de serrage selon l'une quelconque des revendications 1 à 10 ou d'un dispositif de serrage selon l'une quelconque des revendications 11 à 15 pour la fixation étanche aux fluides d'un tuyau ou d'un tube pour un milieu liquide, de préférence du lait, dans un préparateur de boissons, dans laquelle le préparateur de boissons est de préférence un distributeur automatique de boissons pour la distribution de plusieurs boissons chaudes et/ou froides, comprenant une ou plusieurs spécialités de café, une ou plusieurs spécialités de thé et/ou une ou plusieurs spécialités de soupe à boire.
